# EUROPEAN PATENT APPLICATION

(11) **EP 0 577 570 A1**
(43) Date of publication of application: **05.01.1994**
(21) Application number: 93830280.9
(22) Date of filing: 30.06.1993
(51) Int. Cl.: E05D 11/08

(54) **Hinge provided with adjustable friction**

(30) Priority: 30.06.1992 IT MI921594
(71) Applicant: Cavalli, Amilcare, Calolziocorte (Bergamo) (IT)
(72) Inventor: Cavalli, Amilcare, Calolziocorte (Bergamo) (IT)
(74) Representative: Pizzoli, Pasquale Vincenzo

(57) **Abstract**

A hinge provided with adjustable friction to prevent the free rotation of the hinged rigid structures, comprising two bodies (1, 7) provided respectively with substantially cylindrical cavities (1', 7') wherein a shaped pin (4) is slidably inserted being axially shiftable by adjusting means (2, 3) so as to elastically deform friction means (5) interposed between said pin (4) and the wall of cavity (1') of the first body, and thus generate the desired friction between the hinged parts, the inner cavity (7') of the second body (7) being provided with ribs slidable into the grooves of pin (4). With said hinge it is also possible to adjust the friction so as to continuously pass from the condition wherein the rotation of the hinged parts is free to the condition in which the hinge is substantially blocked.

## Description

The present invention relates to the devices for the rotational link of rigid members or structures, and relates in particular to an hinge provided with adjustable friction.

The known hinges commonly used to rotatably link rigid structures of various kind, such as doors, shutters or the like, with their supports or frames, are formed by two bodies, of which the one to be fixed onto the support is provided with a cylindrical pin and the one to be fixed on the door is provided with a cylindrical cavity wherein said pin is inserted.

The main drawback of the known hinges is that said bodies are totally free to rotate reciprocally whereby, if the structures linked thereto are not somehow anchored, said structures may undergo unwanted and/or dangerous motions. A typical instance in this sense is represented by a partially open window whose shutters, because of a sudden draught or an accidental bump, may violently slam causing the glass to break. For the sake of simplicity reference will be made hereafter to the case of a window shutter linked to the respective frame, being apparent that it represents just a non limiting example of the possible applications of the hinge according to the present invention.

The object of the present invention is therefore to provide a hinge which opposes unwanted relative motions of the shutter with respect to the frame, preventing them from occurring or at least controlling the extent and/or amount thereof.

This object is achieved by means of a hinge formed in a known way by two bodies, both provided with a substantially cylindrical inner cavity, the first of which also contains a pin inserted in an axially slidable way inside said cavities, aligned and facing each other, as well as means to adjust the axial position of said pin, and friction means elastically deformable by the axial shifting of said pin, in addition to means for axially blocking said friction means, the friction means and the second body being axially slidable on the pin and being made integral therewith against reciprocal rotations.

The limitation of the relative motion between the shutter and the frame according to the object of the invention is achieved by means of the friction between the friction means and the first body, said friction being proportional to the pressure exerted by the pin on said friction means. This pressure is adjusted by shifting axially the pin through said adjusting means.

The hinge according to the present invention in addition to solving the problem of preventing unwanted motions of the shutter with respect to the frame also offers the advantage of enabling the adjustment of the friction between the parts.

These and other advantages of the hinge according to the present invention will be apparent from the following detailed description of two embodiments thereof, with reference to the annexed drawings wherein :
Fig.1 is a partly sectioned side view of a first embodiment of a hinge according to the present invention; and
Fig.2 is a view similar to the preceding one and relates to a second embodiment of the captioned hinge.

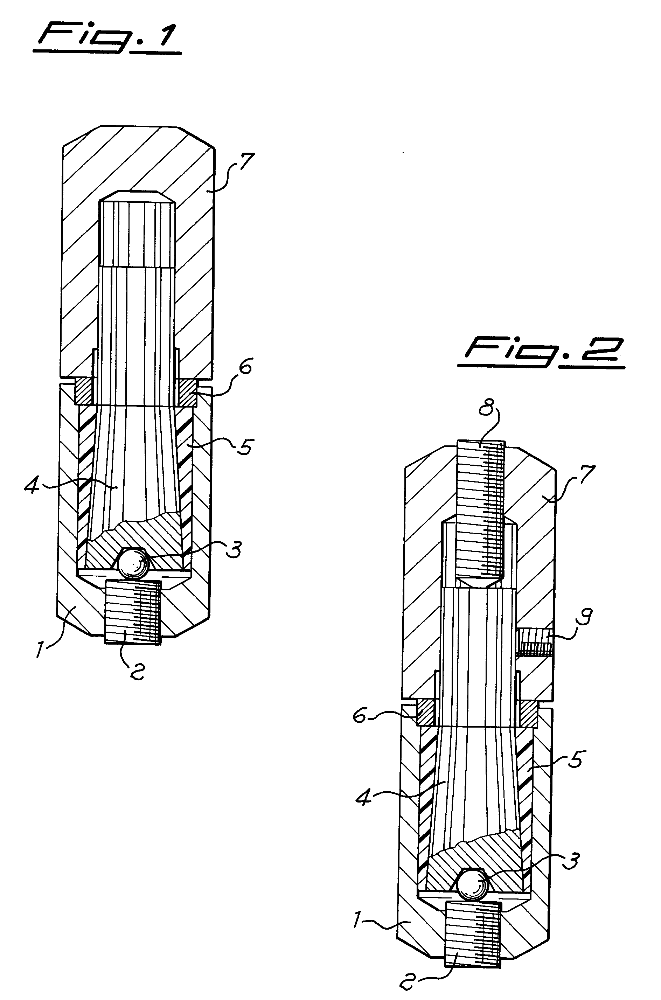

Referring to Fig.1, there is seen that a hinge according to the present invention comprises a lower body 1 and an upper body 7, both substantially cylindrical and provided with central cavities 1' and 7', substantially cylindrical as well, aligned and with their mouths facing each other. The cavity 1' is provided, at its base, with a threaded hole wherein a small adjusting cylinder 2 is housed. A small ball 3 abuts on the base of the small cylinder 2 inside body 1, and is housed in a groove formed in the lower base of an overlying pin 4. The lower part of pin 4 is frusto-conical with its greater base below and becomes cylindrical a little below the middle of its height. The circumference of pin 4 is externally shaped along its whole length with longitudinal grooves wherein corresponding ribs present on the inner circumference of a sleeve 5 inserted in the inner cavity 1' of body 1 are inserted in an axially slidable way.

The sleeve 5 has its cylindrical outer surface of a diameter nearly the same as that of cavity 1' and the frusto-conical ribbed inner surface centered on the axis of said sleeve 5, the inner conicity of said sleeve 5 being also complementary to that of the lower part of pin 4. In this way, by inserting sleeve 5 onto pin 4, the latter is centered inside cavity 1' and made integral with sleeve 5 against rotations about the hinge axis thanks to the peripheral grip of said inner ribs of sleeve 5 on the corresponding outer grooves of pin 4.

A spacer ring 6, inserted onto pin 4, is fixed at the mouth of cavity 1' and made integral with body 1, for example by interference mounting, thus preventing sleeve 5 from coming out of cavity 1' wherein it is housed. The ring 6 preferably abuts on a projection formed inside cavity 1' near the upper end thereof, at a distance from said end such as to make ring 6 project slightly from the mouth of cavity 1'.

The upper cylindrical part of pin 4 also projects from the mouth of cavity 1'. The pin 4 is inserted into the inner cavity 7' of the upper body 7, which cavity is peripherally shaped with longitudinal grooves complementary to those in the upper part of pin 4. The body 7 abuts on ring 6 only, since its cavity 7' is sufficiently long so that a certain distance remains between the upper end of pin 4 and the bottom of said cavity 7'.

From the coupling between the above-mentioned longitudinal grooves and the relative ribs it results that, once the components of the hinge have been assembled, the upper body 7, pin 4 and sleeve 5 become mutually integral against rotating motions about the hinge axis.

The upper body 7 and the lower body 1 of the hinge are provided, in a known way, with means for fixing them onto the respective structures to be hinged, for example with side leaves, to be screwed on the mobile structure and on the relative stationary support, respectively. When a window is hinged by the hinge according to the present invention any rotation of the shutter with respect to its frame would cause the rotation of body 7 with respect to body 1. Since pin 4 is integral with body 7 against said rotation, it also tends to rotate with respect to body 1. Said rotation is allowed by the fact that pin 4 is integral with sleeve 5 inside body 1, but sleeve 5 is free to rotate inside body 1 thanks to its outer surface which is smooth like the inner surface of cavity 1'. Yet, the rotation takes place with a certain friction due to the fact that sleeve 5 is pushed against the wall of cavity 1' by pin 4; the sleeve 5 rubs against said wall with a friction proportional to the pressure exerted by pin 4 against the walls of sleeve 5.

Since sleeve 5 is preferably made of a plastic material of the self-lubricating type, it results to be elastically deformable, and this feature thereof is utilized to advantage in the hinge according to the present invention to create an adjustable friction. In fact, by acting on the small cylinder 2 so as to increase its penetration inside cavity 1', a push is exerted, through the small ball 3, on the lower end of pin 4 which tends to shift upwards inside said cavity 1'. However, ring 6, which is integral with body 1, prevents said sleeve 5 from moving upwards inside cavity 1' under the push of pin 4. It follows that, also thanks to the conicity of pin 4 and sleeve 5 complementary thereto, a deformation of sleeve 5 itself occurs, which tends to expand thus increasing the friction of its outer surface against the wall of cavity 1'.

It is clear that by lowering or raising the position of the small cylinder 2 it is possible to vary at will the resistance opposed by this hinge to the rotation of the mobile structure to which the upper body 7 is fixed. It is thus possible to pass continuously from the condition wherein the rotation of the hinged members is substantially free and therefore similar to that with the known hinges, to the condition of blocked hinge wherein the mutual rotation of bodies 1 and 7 is substantially prevented.

Referring to Fig.2, there is illustrated a second embodiment of the captioned hinge, wherein cavity 7' is provided, at its base, with a threaded hole in which a cylinder 8 is housed, similarly to cavity 1'. The lower end of cylinder 8 located inside cavity 7' is in contact with the upper base of pin 4; in this way it is possible to avoid that body 7 abuts on ring 6, by screwing in cylinder 8 to adjust the position of body 7 with respect to pin 4, and therefore to body 1. This solution permits to compensate for possible vertical positioning mistakes of the mobile structure, on which body 7 is mounted, with respect to its support, on which body 1 is mounted.

Fig.2 also shows a little blocking cylinder 9 housed in a threaded hole formed in the side wall of body 7. This small cylinder 9 (or a similar member) is tightened onto pin 4, after having ended the adjustment of the hinge by means of elements 2 and 8, in order to eliminate the clearance possibly resulting from an imperfect coupling between pin 4 and body 7.

It is apparent that the hinge provided with adjustable friction according to the present invention may be made in shapes different from those illustrated above, for example with different shapes of the longitudinal grooves and of the relative ribs on members 4, 5 and 7. It is also possible to accomplish the constraint against the rotations of said members in a different way, for example by using a small side blocking cylinder, similar to cylinder 9, which constrains body 7 to pin 4, or by an axial insert, inserted through a hole similar to that of cylinder 8, suitable to torsionally constrain body 7 and pin 4. These solutions would eliminate the need to form the longitudinal grooves on the upper part of pin 4 and the corresponding ribs in cavity 7', thus simplifying the manufacturing of said members.

In the same way, the other members 2, 3, 6, 8 and 9 may be replaced with other similar or equivalent members suitable to perform the same functions; for example, in case the lower base of body 1 would not be accessible, the adjusting means could consist in a cam located below pin 4 and suitable to be adjusted through a side opening.

In the two illustrated embodiments it is obviously possible to change the conicity of the lower part of pin 4, as long as a similar change is also made to the inner surface of sleeve 5 which must be complementary thereto.

The materials used to make the members may be chosen according to technical and economical requirements, all the members being preferably metallic except sleeve 5 which, as already mentioned, is preferably made of self-lubricating plastic material.

## Claims

1. A hinge provided with adjustable friction comprising a first body (1) and a second body (7) provided with a substantially cylindrical inner cavity (7'), characterized in that also the first body (1) is provided with a substantially cylindrical inner cavity (1') wherein the lower part of a pin (4) is inserted in an axially slidable way, the upper part thereof being inserted in an axially slidable way inside cavity (7'), and in that it comprises means (2, 3) for adjusting the axial position of said pin (4) and friction means (5) axially integral with said first body (1) and elastically deformable by the axial shifting of said pin (4), the adjusting means (2, 3) and the friction means (5) being inserted in the first body (1) and the second body (7) and the friction means (5) being made integral with said pin (4) against mutual rotations.

2. A hinge according to claim 1, characterized in that the pin (4) is formed by a frusto-conical part from whose smaller base a cylindrical part extends.

3. A hinge according to claim 2, characterized in that the side surface of the pin (4) is provided with longitudinal grooves along its whole length.

4. A hinge according to claim 2 or 3, characterized in that the friction means (5) consist of a cylindrical sleeve made of an elastically deformable material, said sleeve having an outer diameter nearly equal to that of the cavity (1') of the first body (1) and a frusto-conical inner surface complementary to the frusto-conical part of pin (4) and coaxial with the outer cylindrical surface.

5. A hinge according to claim 4, characterized in that the inner frusto-conical surface of the sleeve is provided with longitudinal ribs complementary to the longitudinal grooves of the frusto-conical part of the pin (4) along its whole length.

6. A hinge according to claim 3, characterized in that the cavity (7') of the second body (7) is provided with longitudinal ribs complementary to the longitudinal grooves of the cylindrical part of pin (4).

7. A hinge according to claim 4, characterized in that the sleeve is axially blocked by means of a ring (6) inserted on the cylindrical part of the pin (4) and fixed to the mouth of the cavity (1') of the first body (1).

8. A hinge according to any of the preceding claims, characterized in that the adjusting means (2, 3) consist in a small cylinder housed in a threaded hole located on the base of the cavity (1') of the first body (1), and in a small ball which is interposed between said cylinder and the base of the pin (4).

9. A hinge according to any of the preceding claims, characterized in that the second body (7) is provided with an axial threaded hole located on the base of its inner cavity (7') and provided with a cylinder (8) abutting on the upper end of the pin (4).

10. A hinge according to any of the preceding claims, characterized in that the second body (7) is provided with a lateral threaded hole housing a small blocking cylinder (9).
